# EUROPÄISCHE PATENTSCHRIFT

(11) **EP 3 995 673 B1**
(45) Veröffentlichungstag und Bekanntmachung des Hinweises auf die Patenterteilung: **29.05.2024**
(21) Anmeldenummer: 21206289.7
(22) Anmeldetag: 03.11.2021
(51) Int. Cl.: F01K 21/04, F01K 23/06, F01K 25/06, F28C 3/08, F01N 5/02, F28D 5/00, F28D 21/00

(54) **VERFAHREN UND EINRICHTUNG ZUR REKUPERATION VON ENERGIE AUS WÄRMEFÜHRENDEN MEDIEN**
METHOD AND DEVICE FOR RECOVERING ENERGY FROM HEAT-CONDUCTING MEDIA
PROCÉDÉ ET DISPOSITIF DE RÉCUPÉRATION DE L'ÉNERGIE À PARTIR DES MILIEUX CALOPORTEURS

(30) Priorität: 06.11.2020 DE 102020129357; 06.11.2020 DE 102020129356
(43) Veröffentlichungstag der Anmeldung: 11.05.2022
(73) Patentinhaber: Schubert, Michael, 27498 Helgoland (DE)
(72) Erfinder: Schubert, Michael, 27498 Helgoland (DE)
(74) Vertreter: Hecht, Jan-David

(56) Entgegenhaltungen:
- WO-A2-2010/037912
- DE-A1-102013 104 868
- US-A1- 2003 005 696
- US-A1- 2013 227 948

## Beschreibung

Die vorliegende Erfindung betrifft ein Verfahren zur Rekuperation von Energie aus wärmeführenden Medien nach dem Oberbegriff von Anspruch 1 und eine Einrichtung zur Rekuperation von Energie aus wärmeführenden Medien nach dem Oberbegriff von Anspruch 12.

In zahlreichen Prozessen von Gewerbe, Handwerk und Industrie, aber auch des persönlichen Alltags fällt Abwärme an, die ungenutzt in die Umgebung abgegeben wird. Durch die Nutzung dieser Abwärme können die Wirkungsgrade solcher Prozesse bedeutend erhöht oder allgemeiner gesprochen Energie nutzbar gemacht werden, so dass insgesamt der gesamte Primärenergiebedarf gesenkt werden kann.

Beispielsweise muss Dampfkreisläufen über Kondensatoren Energie prozessbedingt entzogen und abgeführt werden. Bauteile von Verbrennungsmotoren müssen aus technischen Gründen gekühlt und die Wärme abgeführt werden. Aber auch Energie aus Abgasen wird überwiegend ungenutzt in die Umgebung emittiert.

Laut Angaben des Fraunhofer Instituts ("Stromerzeugung in Deutschland im Jahre 2017, file:///C:/Users/HE/AppData/Local/Temp/Stromerzeugung_2017.pdf) wurde im Jahre 2017 in Deutschland eine Energiemenge von etwa 337,0 TWh produziert, wovon ca. 72,2 TWh auf Kernenergie, ca. 134,0 TWh auf Braunkohle, ca. 81,7 TWh auf Steinkohle und ca. 49,1 TWh auf Gas entfielen. Solche Kraftwerke weisen im Schnitt einen Wärmeverlust von ca. 50 % auf. Daher wurden im Jahre 2017 ca. 337,0 TWh Wärmeleistung in die Umgebung emittiert.

Dokumente WO 2010/037912 A2 und DE 10 2013 104868 A1 offenbaren jeweils ein Verfahren zur Rekuperation von Energie aus dem Stand der Technik.

Bekannt ist beispielsweise schon, Rekuperatoren in Kraftwerken und Feuerungsanlagen einzusetzen, um eine Luftvorwärmung zu erzielen. Der Rekupererator ist dabei als Wärmeübertrager (Wärmetauscher) ausgebildet, der einen Teil der Wärme der Abgase auf die Frischluft überträgt. Durch die so erhitzte Frischluft wird weniger Brennstoff verbraucht, um im Heizkessel die gewünschte Betriebstemperatur zu erreichen bzw. zu halten.

Nachteilig daran ist, dass die durch Rekuperation rückgewonnene Energie nur in dem Prozess, dem die Abwärme entnommen wurde, verwendet werden kann.

Es ist daher Aufgabe der vorliegenden Erfindung, eine Rückgewinnung (Rekuperation) der Energie aus wärmeführenden Medien eines Prozesses zu ermöglichen, wobei die Energie in beliebigen anderen Prozessen einsetzbar ist. Die Rekuperation soll insbesondere besonders effizient ermöglicht werden. Vorzugsweise soll die Rekuperation verfahrenstechnisch einfach und kostengünstig möglich sein.

Diese Aufgabe wird gelöst mit dem erfindungsgemäßen Verfahren nach Anspruch 1 und der erfindungsgemäßen Vorrichtung nach Anspruch 12. Vorteilhafte Weiterbildungen sind in den Unteransprüchen und in der nachfolgenden Beschreibung zusammen mit den Figuren angegeben.

Erfinderseits wurde erkannt, dass diese Aufgabe in überraschender Art und Weise dadurch gelöst werden kann, wenn ein Wärmetauscher verwendet wird, der an einen Rekuperationsmedienkreislauf angeschlossen ist, wobei in dem Rekuperationsmedienkreislauf ein Rekuperationsmedium geführt wird, das zumindest in dem Wärmetauscher zwei Stoffe aufweist, wobei der erste Stoff im thermischen Arbeitsbereich des Rekuperationsmedienkreislaufs gasförmig ist und der zweite Stoff im thermischen Arbeitsbereich des Rekuperationsmedienkreislaufs einen Phasenwechsel von flüssig nach gasförmig vollzieht. Dann kann der erste Stoff zum Treiben des Rekuperationsmedienkreislaufs und der zweite Stoff als Arbeitsmedium für die Energieumwandlung verwendet werden, wodurch die Energie beliebigen Prozessen zur Verfügung gestellt werden kann.

Das erfindungsgemäße Verfahren zur Rekuperation von Energie aus wärmeführenden Medien, wobei das wärmeführende Medium in einer Wärmemedienführung geführt wird und einem ersten Wärmetauscher zugeführt wird, der eine erste Medienführung mit einem ersten Eingang und einem ersten Ausgang und eine zweite Medienführung mit einem zweiten Eingang und einem zweiten Ausgang aufweist, wobei der erste Eingang der ersten Medienführung des ersten Wärmetauschers mit dem wärmeführenden Medium gespeist wird und der zweite Eingang der zweiten Medienführung des ersten Wärmetauschers mit einem Rekuperationsmedium gespeist wird, das in einem Rekuperationsmedienkreislauf geführt wird, wobei der Rekuperationsmedienkreislauf in einem thermischen Arbeitsbereich verwendet wird mit Tmin ≤ T ≤ Tmax, zeichnet sich dadurch aus, dass das Rekuperationsmedium in dem ersten Wärmetauscher zwei Stoffe aufweist, wobei der erste Stoff im thermischen Arbeitsbereich gasförmig ist und der zweite Stoff im thermischen Arbeitsbereich einen Phasenwechsel von flüssig nach gasförmig vollzieht.

In einer vorteilhaften Weiterbildung ist vorgesehen, dass die zwei Stoffe des Rekuperationsmediums in dem Arbeitsbereich nicht miteinander chemisch reagieren. Dann ist das Verfahren besonders effizient. Wenn dagegen eine chemische Reaktion vorliegt, dann müsste es sich um eine Gleichgewichtsreaktion handeln, wobei die Gleichgewichtslage durch Temperatur bzw. Druck so verlagerbar ist, dass eine Trennung der zwei Stoffe erfolgen kann.

In einer vorteilhaften Weiterbildung ist vorgesehen, dass das Rekuperationsmedium in der zweiten Medienführung des ersten Wärmetauschers mit dem zweiten Stoff beaufschlagt wird, wobei der zweite Stoff bevorzugt eingespritzt, insbesondere flüssig eingespritzt und vorzugsweise verdampft wird. Dadurch kann die Wärme des Wärme führenden Mediums besonders gut aufgenommen werden.

In einer vorteilhaften Weiterbildung ist vorgesehen, dass das Rekuperationsmedium in der zweiten Medienführung des ersten Wärmetauschers mehrfach hintereinander mit dem zweiten Stoff beaufschlagt wird. Dadurch kann besonders viel Wärme des Wärme führenden Mediums aufgenommen werden. Das Beaufschlagen erfolgt vorzugsweise durch Einspritzen des zweiten Stoffes in den ersten Stoff, wobei der zweite Stoff verdampft wird.

In einer vorteilhaften Weiterbildung ist vorgesehen, dass das Rekuperationsmedium stromaufwärts des ersten Wärmetauschers einem Energieumwandler zugeführt wird, in der dem Rekuperationsmedium der zweite Stoff zugeführt wird, wobei bevorzugt eine so große Menge des zweiten Stoffes zugeführt wird, bis sich eine Sättigung im Rekuperationsmedium hinsichtlich des zweiten Stoffes einstellt. Dadurch wird die Rekuperation besonders effizient, weil die Temperatur des Rekuperationsmediums herabgesetzt wird und dadurch besonders viel Wärme aus dem Wärme führenden Medium aufgenommen werden kann.

Erfindungsgemäß ist vorgesehen, dass ein zweiter Wärmetauscher (Rekuperationselement) mit einer ersten Medienführung mit einem ersten Eingang und einem ersten Ausgang und einer zweiten Medienführung mit einem zweiten Eingang und einem zweiten Ausgang besteht, wobei der erste Ausgang des zweiten Wärmetauschers mit dem zweiten Eingang des ersten Wärmetauschers verbunden ist und der zweite Ausgang des ersten Wärmetauschers mit dem zweiten Eingang des zweiten Wärmetauschers verbunden ist. Dann ist der Rekuperationsmedienkreislauf besonders kompakt und effizient ausgebildet.

In einer vorteilhaften Weiterbildung ist vorgesehen, dass der Rekuperationsmedienkreislauf eine Energieumwandlungsvorrichtung aufweist, wobei die Energieumwandlungsvorrichtung bevorzugt stromabwärts des ersten Ausgangs des zweiten Wärmetauschers angeordnet ist, wobei die Energieumwandlungsvorrichtung insbesondere als Dampfturbine ausgebildet ist, wobei die Energieumwandlungsvorrichtung vorzugsweise einem Verbraucher Energie zuführt. Dann lässt sich beliebigen externen und internen Prozessen rückgewonnene Energie zuführen. Außerdem sind die technischen Anforderungen an diese Energieumwandlungsvorrichtung gering, weil die Temperatur in der Energieumwandlungsvorrichtung nur relativ gering ist.

In einer vorteilhaften Weiterbildung ist vorgesehen, dass der Rekuperationsmedienkreislauf einen Verdichter aufweist, wobei der Verdichter bevorzugt stromaufwärts des ersten Eingangs des zweiten Wärmetauschers angeordnet ist, wobei der Verdichter insbesondere ein Turboverdichter ist. Dadurch wird der Rekuperationsmedienkreislauf besonders einfach und effizient angetrieben.

In einer vorteilhaften Weiterbildung ist vorgesehen, dass der Rekuperationsmedienkreislauf einen Flüssigkeitsabscheider aufweist, wobei der Flüssigkeitsabscheider bevorzugt stromabwärts der Energieumwandlungsvorrichtung und stromaufwärts des Verdichters angeordnet ist. Dadurch erfolgt die Trennung von ersten und zweiten Stoff im Rekuperationsmedienkreislauf besonders einfach.

In einer vorteilhaften Weiterbildung ist vorgesehen, dass der vom Flüssigkeitsabscheider abgeschiedene zweite Stoff mittels einer Pumpe dem Rekuperationsmedienkreislauf zugeführt wird, wobei der zweite Stoff bevorzugt der zweiten Medienführung des ersten Wärmetauschers und/oder dem Energieumwandler zugeführt wird, wobei die Zuführung insbesondere getrennt steuerbar ist. Dadurch kann der Rekuperationsmedienkreislauf in Bezug auf prozesstechnische Anforderungen, insbesondere bei Lastwechseln besonders gut angepasst werden.

In einer vorteilhaften Weiterbildung ist vorgesehen, dass die Energieumwandlungsvorrichtung die Pumpe und/oder den Verdichter mit Energie versorgt, wobei die Energieumwandlungsvorrichtung bevorzugt der Pumpe bzw. dem Verdichter mechanische Energie zuführt. Dadurch läuft der Rekuperationsprozess weitgehend autark. Nur für den Start des Rekuperationsprozess wird gegebenenfalls ein Anlasser für Verdichter und Pumpe benötigt.

In einer vorteilhaften Weiterbildung ist vorgesehen, dass Pumpe und/oder Verdichter als mechanisch angetriebene Vorrichtungen ausgebildet sind, weil sie dann direkt mechanisch durch die Energieumwandlungsvorrichtung antreibbar sind. Alternativ oder zusätzlich kann aber auch vorgesehen sein, dass Pumpe und/oder Verdichter als elektrisch angetriebene Vorrichtungen ausgebildet sind. Dann könnte die Energieumwandlungsvorrichtung sie direkt oder mit Hilfe einer weiteren Energieumwandlungsvorrichtung, die mechanische Energie in elektrische Energie wandelt, antreiben.

In einer vorteilhaften Weiterbildung ist vorgesehen, dass der Rekuperationsmedienkreislauf einen Kondensator aufweist, wobei der Kondensator bevorzugt stromabwärts der Energieumwandlungsvorrichtung und stromaufwärts des Flüssigkeitsabscheiders angeordnet ist. Durch den Kondensator kann besonders gut auf Lastwechsel im Rekuperationsmedienkreislauf reagiert werden. Der Kondensator kann dabei vorzugsweise eine Kühlung aufweisen, beispielsweise durch einen Luft- oder Wasserstrom, der ggf. noch durch ein Gebläse bzw. eine Pumpe verstärkt werden kann.

In einer vorteilhaften Weiterbildung ist vorgesehen, dass der Rekuperationsmedienkreislauf einen Überhitzer aufweist, wobei der Überhitzer bevorzugt stromabwärts des ersten Ausgangs des zweiten Wärmetauschers und stromaufwärts der Energieumwandlungsvorrichtung angeordnet ist, wobei der Überhitzer insbesondere als dritter Wärmetauscher ausgebildet ist, der eine erste Medienführung mit einem ersten Eingang und einem ersten Ausgang und eine zweite Medienführung mit einem zweiten Eingang und einem zweiten Ausgang aufweist, wobei der zweite Eingang des dritten Wärmetauschers mit dem ersten Ausgang des zweiten Wärmetauschers und der zweite Ausgang des dritten Wärmetauschers mit der Energieumwandlungsvorrichtung verbunden ist und die erste Medienführung des dritten Wärmetauschers Teil einer Überhitzungsmedienführung ist. Dadurch wird die Leistungsabgabe aus dem Rekuperationsmedienkreislauf in der Energieumwandlungsvorrichtung erhöht.

In einer vorteilhaften Weiterbildung ist vorgesehen, dass Brennmittel verwendet werden, um zumindest für den Fall, dass nicht ausreichend Wärme über das Wärme führende Medium bereitgestellt werden kann, das Rekuperationsmedium zu erwärmen, bevorzugt das Rekuperationsmedium in dem ersten Wärmetauscher zu erwärmen. Dadurch kann beispielsweise durch die Verbrennung von Wasserstoff die Erwärmung des Rekuperationsmediums besorgt werden, so dass die Einrichtung unabhängig von der angebotenen Wärmeenergie des Wärme führenden Mediums mit konstanter Leistung betreiben zu können.

In einer vorteilhaften Weiterbildung ist vorgesehen, dass der für die Verbrennung notwenige Sauerstoff dem Rekuperationsmedium beigegeben wird. Dadurch kann die Verbrennung sehr leicht in die Einrichtung einbezogen werden.

Weiter bezieht sich die Erfindung auf eine Einrichtung zur Rekuperation von Energie aus wärmeführenden Medien, mit einem ersten Wärmetauscher, der eine erste Medienführung mit einem ersten Eingang und einem ersten Ausgang und eine zweite Medienführung mit einem zweiten Eingang und einem zweiten Ausgang aufweist, wobei die erste Medienführung des ersten Wärmetauschers mit einer Wärmemedienführung verbunden ist und die zweite Medienführung des ersten Wärmetauschers mit einem Rekuperationsmedienkreislauf verbunden ist, wobei der Rekuperationsmedienkreislauf in einem thermischen Arbeitsbereich mit Tmin ≤ T ≤ Tmax verwendbar ist, dadurch gekennzeichnet, dass das Rekuperationsmedium in dem ersten Wärmetauscher zwei Stoffe aufweist, die miteinander nicht chemisch reagieren, wobei der erste Stoff ausgebildet ist, im thermischen Arbeitsbereich gasförmig zu sein, und der zweite Stoff ausgebildet ist, im thermischen Arbeitsbereich einen Phasenwechsel von flüssig nach gasförmig zu vollziehen, wobei ein zweiter Wärmetauscher mit einer ersten Medienführung mit einem ersten Eingang und einem ersten Ausgang und einer zweiten Medienführung mit einem zweiten Eingang und einem zweiten Ausgang besteht, wobei der erste Ausgang des zweiten Wärmetauschers mit dem zweiten Eingang des ersten Wärmetauschers verbunden ist und der zweite Ausgang des ersten Wärmetauschers mit dem zweiten Eingang des zweiten Wärmetauschers verbunden ist.

In einer vorteilhaften Weiterbildung ist vorgesehen, dass die Einrichtung ausgebildet ist, das erfindungsgemäße Verfahren auszuführen.

In einer vorteilhaften Weiterbildung ist vorgesehen, dass die Wärmemedienführung in den Kühlkreislauf einer Verbrennungsmaschine eingebunden ist. Dadurch kann die Erfindung beispielsweise in einem Kraftfahrzeug, sei es zu Land, Luft oder Wasser eingebunden werden.

In einer vorteilhaften Weiterbildung ist vorgesehen, dass die Überhitzungsmedienführung in die Abgasführung einer Verbrennungsmaschine eingebunden ist. Dadurch wird diese Einbindung noch verbessert.

In einer vorteilhaften Weiterbildung ist vorgesehen, dass das Rekuperationsmedium Luft als ersten Stoff und Wasser als zweiten Stoff aufweist. Diese Stoffe haben sich für das Rekuperationsmedium besonders bewährt, da sie billig verfügbar und prozesstechnisch einfach handhabbar sind. Außerdem liegen die Temperaturen des Arbeitsbereichs prozesstechnisch günstig. Es sind aber auch andere Stoffe für das Rekuperationsmedium möglich.

In einer vorteilhaften Weiterbildung ist vorgesehen, dass der Verdichter und der Verbraucher als einheitliche Vorrichtung ausgebildet sind, die getrennte Medienführungen hinsichtlich des Rekeperationsmediums und eines Arbeitsmediums des Verbrauchers aufweist.

In einer vorteilhaften Weiterbildung ist vorgesehen, dass Brennmittel bestehen, die angepasst sind, das Rekuperationsmedium zu erwärmen, bevorzugt das Rekuperationsmedium in dem ersten Wärmetauscher zu erwärmen

Die Merkmale und weitere Vorteile der vorliegenden Erfindung werden im Folgenden anhand der Beschreibung bevorzugter Ausführungsbeispiele im Zusammenhang mit den Figuren deutlich. Dabei zeigen rein schematisch:
- Fig. 1: die erfindungsgemäße Einrichtung in einer ersten bevorzugten Ausgestaltung in einer Blockdarstellung,
- Fig. 2: die erfindungsgemäße Einrichtung in einer zweiten bevorzugten Ausgestaltung in einer Blockdarstellung,
- Fig. 3: die erfindungsgemäße Einrichtung in einer dritten bevorzugten Ausgestaltung in einer Blockdarstellung und
- Fig. 4: die erfindungsgemäße Einrichtung in einer vierten bevorzugten Ausgestaltung in einer Blockdarstellung.

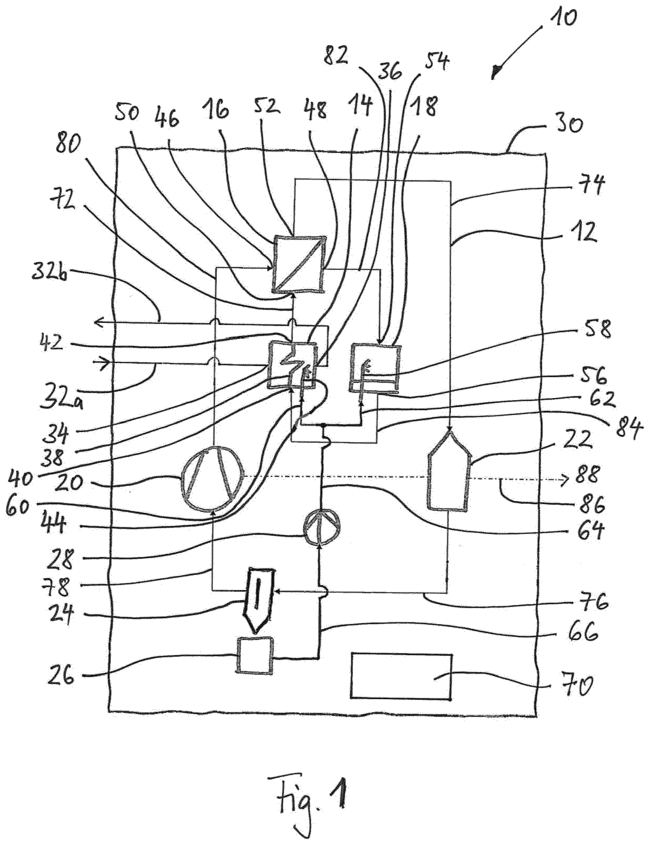

In Fig. 1 ist eine erste bevorzugte Ausführungsform der erfindungsgemäßen Einrichtung 10 zur Rekuperation näher dargestellt.

Es ist zu erkennen, dass die Einrichtung 10 einen Rekuperationsmedienkreislauf 12 aufweist, in dem ein erster Wärmetauscher 14, ein zweiter Wärmetauscher 16, ein Energieumwandler 18, ein Verdichter 20, eine Energieumwandlungsvorrichtung 22, ein Abscheider 24, ein Sammelbehälter 26 und eine Pumpe 28 angeordnet sind.

Die Einrichtung 10 ist allseits von einer thermischen Isolierung 30 umgeben, wobei entsprechende Durchführungen (nicht gezeigt) für die Wärmemedienführung 32 bestehen.

Der erste Wärmetauscher 14 weist eine erste Medienführung (nicht gezeigt) mit einem ersten Eingang 34 und einem ersten Ausgang 36 auf. Außerdem besteht eine zweite Medienführung 38 mit einem zweiten Eingang 40 und einem zweiten Ausgang 42. Zusätzlich besteht in der zweiten Medienführung 38 ein Sprühnebelerzeuger 44.

Der zweite Wärmetauscher 16, der das eigentliche Rekuperationselement ist, weist eine erste Medienführung (nicht gezeigt) mit einem ersten Eingang 46 und einem ersten Ausgang 48 auf. Außerdem besteht eine zweite Medienführung (nicht gezeigt) mit einem zweiten Eingang 50 und einem zweiten Ausgang 52.

Der Energieumwandler 18 weist einen Eingang 54 und einen Ausgang 56 für das Rekuperationsmedium auf. Außerdem besteht ein Sprühnebelerzeuger 58.

Der Sprühnebelerzeuger 44 des ersten Wärmetauschers 14 und der Sprühnebelerzeuger 58 des Energieumwandlers 18 sind jeweils über die Zuleitungen 60, 62, 64 mit der Pumpe 28 verbunden. Die Pumpe 28 wiederum wird über die Leitung 66 aus dem Sammelbehälter 26 gespeist. Außerdem besteht eine Steuerung bzw. Regelung 70, die die Einrichtung 10, darunter die Pumpe 28, den Verdichter 20 und die Sprühnebelerzeuger 44, 58 steuert und regelt.

Die Medienführung 32 ist mit ihrem Zuleitungsteil 32a mit dem ersten Eingang 34 des ersten Wärmetauschers 14 verbunden und ihr Ableitungsteil 32b ist mit dem ersten Ausgang 36 des ersten Wärmetauschers 14 verbunden.

Ausgehend vom zweiten Ausgang 42 des ersten Wärmetauschers 14 wird das Rekuperationsmedium über die Leitungsverbindung 72 dem zweiten Eingang 50 des zweiten Wärmetauschers 16 zugeführt und tritt aus dem zweiten Ausgang 52 des zweiten Wärmetauschers 16 wieder aus. Von dort wird es über die Leitungsverbindung 74 der Energieumwandlungsvorrichtung 22 zugeführt und von dort über die Leitungsverbindung 76 an den Flüssigkeitsabscheider 24 übergeben. Vom Flüssigkeitsabscheider 24 wird das Rekuperationsmedium über die Leitungsverbindung 78 an den Verdichter 20 übergeben und vom Verdichter 20 über die Leitungsverbindung 80 dem ersten Eingang 46 des zweiten Wärmetauschers 16 zugeführt. Das Rekuperationsmedium verlässt den zweiten Wärmetauscher 16 durch den ersten Ausgang 48 und wird über die Leitungsverbindung 82 dem Eingang 54 des Energieumwandlers 18 zugeführt. Es tritt aus dem Ausgang 56 des Energieumwandlers 18 aus und wird schließlich über die Leitungsverbindung 84 wieder dem ersten Wärmetauscher 14 zugeführt, wobei es in den zweiten Eingang 40 eintritt.

Das Rekuperationsmedium besteht in diesem Ausführungsbeispiel aus trockener Luft und Wasser, wobei dieses Wasser mittels des Flüssigkeitsabscheiders 24 abgesondert und im Sammelbehälter 26 gesammelt wird. Mittels der Pumpe 28 wird es den Sprühnebelerzeugern 44, 58 zugeführt, um die Luft in der ersten Medienführung des ersten Wärmeerzeugers 14 bzw. in dem Energieumwandler 18 zu befeuchten, wodurch der Luft Energie entzogen und in Verdampfungsenergie umgewandelt wird. Die Sprühnebelerzeuger 44, 58 bewirken also jeweils eine Energieumwandlung.

Durch unterschiedliche Rohrstärken für die Leitungsverbindungen 60, 62 können den Sprühnebelerzeugern 44, 58 unterschiedliche Mengen Wasser zugeführt werden. Außerdem können auch getrennte Regelungen für die Wasserzufuhr für die beiden Sprühnebelerzeuger 44, 58 bestehen, so dass eine exakte Anpassung der Einrichtung 10 an unterschiedliche Anforderungen ermöglicht wird.

Die Wärmemedienführung 32 ist hier beispielsweise in den Kühlkreislauf (nicht gezeigt) eines Verbrennungsmotors (nicht gezeigt) eingebunden, so dass die von dem Verbrennungsmotor abgeführte Wärme über die Einrichtung 10 rückgewonnen wird.

Die Energieumwandlungsvorrichtung 22 schließlich ist in diesem Ausführungsbeispiel als Turbine, beispielsweise als Dampfturbine ausgebildet, wobei ihre Dampfführung Teil des Rekuperationskreislaufs 12 ist. Die mechanische Seite der Dampfturbine 22 ist mit einer Antriebswelle 86 verbunden, die sowohl den Verdichter 20 als auch die Pumpe 28, die beispielsweise als Kesselspeisewasserpumpe ausgebildet ist, treibt und zusätzlich noch einen nicht näher dargestellten externen Verbraucher 88 (beispielsweise einen elektrischen Generator) treiben kann.

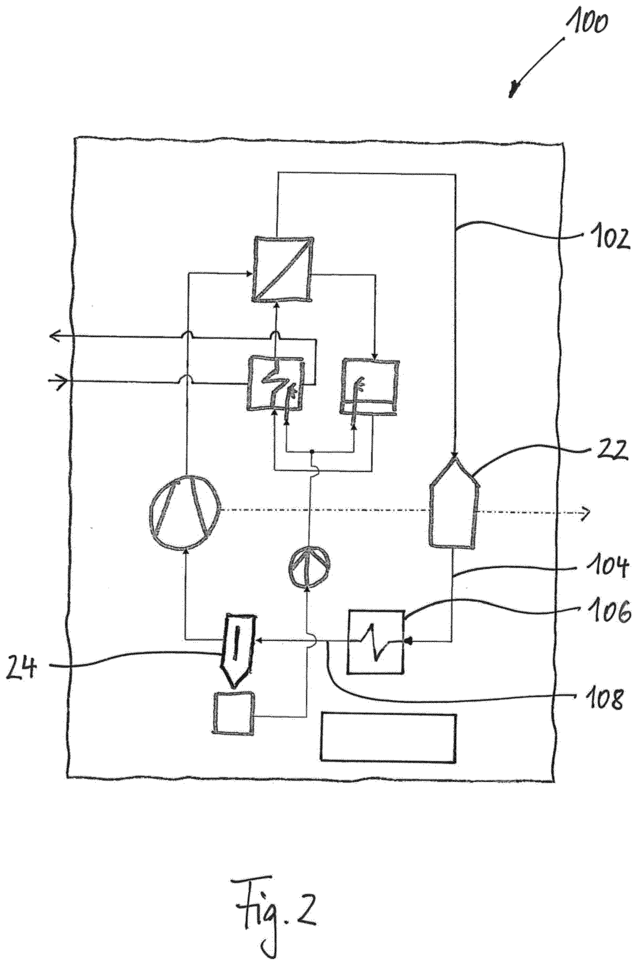

Die zweite bevorzugte Ausgestaltung der erfindungsgemäßen Einrichtung 100 nach Fig. 2 unterscheidet sich nur dadurch von der Einrichtung 10 nach Fig. 1, dass im Rekuperationskreislauf 102 stromabwärts der Energieumwandlungsvorrichtung 22 mittels der Leitungsführung 104 ein Kondensator 106 angeordnet ist, mit dem stromabwärts über die Leitungsführung 108 der Flüssigkeitsabscheider 24 verbunden ist.

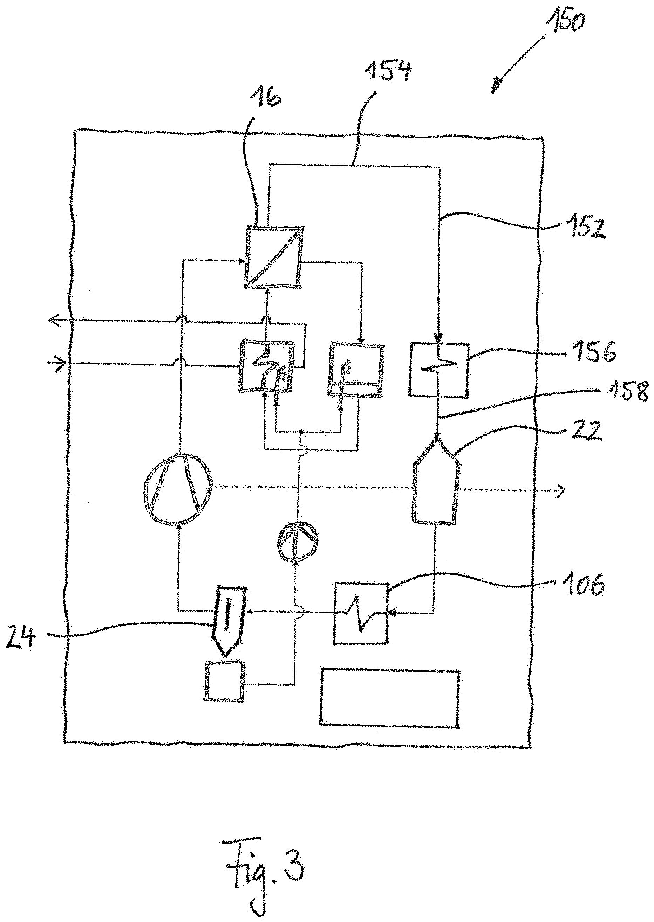

Die dritte bevorzugte Ausgestaltung der erfindungsgemäßen Einrichtung 150 nach Fig. 3 unterscheidet sich nur dadurch von der Einrichtung 100 nach Fig. 2, dass im Rekuperationskreislauf 152 stromabwärts des zweiten Wärmetauschers 16 mittels der Leitungsführung 154 ein Überhitzer 156 angeordnet ist, mit dem stromabwärts über die Leitungsführung 158 die Energieumwandlungsvorrichtung 22 verbunden ist.

Die erfindungsgemäße Rekuperation sollen nun im Folgenden anhand der erfindungsgemäßen Einrichtung 100 und dem damit ausgeführten Verfahren auch anhand von Prozessdaten näher erläutert werden.

Direkt vor dem Verdichter 20 besteht das Rekuperationsmedium im Wesentlichen aus trockener Luft, die einen Wasserdampfgehalt von 0,013 kg auf 1 kg Luft aufweist. Der Druck des Rekuperationsmediums beträgt 0,1 MPa und seine Temperatur beträgt 20°C. Damit ist eine Energie von 0,1 kJ verbunden.

Der Verdichter 20 verdichtet das Rekuperationsmedium und erhöht dadurch dessen Druck auf 0,3 MPa. Hierzu werden dem Verdichter 20 138,6 kJ Energie aus der Energieumwandlungsvorrichtung 22 zugeführt. Dabei steigt die Temperatur des Rekuperationsmediums auf 155°C, so dass die Energie des Rekuperationsmedium direkt nach dem Verdichter 20 138,6 kJ beträgt.

In dem zweiten Wärmetauscher 16, dem Rekuperationselement, wird die Temperatur des Rekuperationsmediums auf 100°C durch Wärmetausch abgesenkt. Dadurch sinkt die Energie des Rekuperationsmediums auf 82,2 kJ.

In dem Energieumwandler 18 wird die trockene Luft mit Wasser angereichert bis Sättigung eintritt, wodurch das Rekuperationsmedium einen Wasserdampfgehalt von 0,0305 kg auf 1 kg Luft aufweist. Dabei sinkt die Temperatur des Rekuperationsmediums auf 62°C, weil das Wasser verdampft. Die Energie des Rekuperationsmediums bleibt allerdings konstant, weil die durch den Temperaturabfall entzogene Energie in der Verdampfungsenthalpie des Wassers gespeichert ist.

In dem ersten Wärmetauscher 14 wird die Temperatur durch das Wärme führende Medium wieder erhöht, wodurch die Aufnahmefähigkeit für Wasser steigt, und zugleich Wasser zugegeben. Dabei werden 205,3 kJ Energie zugeführt. Dadurch steigt die Temperatur des Rekuperationsmediums nach dem ersten Wärmetauscher 16 auf 95°C und seine Energie beträgt 287,5 kJ, wobei der Wasserdampfgehalt bei 0,1005 Kg auf 1 kg Luft liegt.

Im Rekuperator 16 wird das Rekuperationsmedium weiter erhitzt, wodurch dessen Temperatur auf 142°C steigt und dadurch die Energie des Rekuperationsmediums auf 343,9 kJ steigt.

In der Energieumwandlungsvorrichtung 22 wird das Rekuperationsmedium entspannt und dabei mechanische Arbeit verrichtet, die über die Welle 86 abgegeben wird. Dabei sinkt die Temperatur des Rekuperationsmediums auf 36°C und damit auch dessen Energie auf 68,6 kJ. Außerdem kondensiert schon ein Teil des Wassers im Rekuperationsmedium, so dass der Wasserdampfgehalt auf 0,0358 kg auf 1 kg Luft sinkt. Die von der Energieumwandlungsvorrichtung 22 umgewandelte Energie beträgt 275,1 kJ, wovon 138,6 kJ dem Verdichter 22 und 136,5 kJ dem externen Verbraucher 88 zugeführt werden. 20%, d.h. 68,6 kJ fallen als Verluste an und werden vom Rekuperationsmedium abgeführt.

Diese noch bestehende überschüssige Energie in Höhe von 68,5 kJ wird mittels des Kondensators 106 an die Umgebung abgeführt und anschließend das kondensierte Wasser über den Flüssigkeitsabscheider 24 dem Rekuperationsmedium entnommen und dem Sammelbehälter 26 zugeführt, wodurch der Wasserdampfgehalt wieder auf 0,013 kg je 1 Kg Luft reduziert wird.

Im vorliegenden Beispiel wurden 205,3 kJ als externe Energie zugeführt, 138,6 kJ führt der der Verdichter 20 dem Rekuperationsmedium zu, die allerdings vom Energieumwandler 22 bereit gestellt werden. 68,8 kJ werden als Verluste über den Kondensator 106 abgeführt. Es verbleiben also 136,5 kJ tatsächlich der Einrichtung 10 entnommene Leistung, die einem externen Verbraucher 88 zur Verfügung gestellt wird, der beispielsweise als Generator ausgebildet ist und Strom erzeugt.

Somit weist die Einrichtung einen Wirkungsgrad von 136,5 kJ/205,3 kJ = 66,48 % auf. Allein für die Energieerzeugung in Deutschland mit Bezug auf das Jahr 2017 hätte unter Anwendung der erfindungsgemäßen Einrichtung 10 somit etwa 112 TWh rückgewonnen werden können.

Beispielsweise könnten der Verdichter 20 und der externe Verbraucher 88 als einheitliche Vorrichtung ausgebildet sein, die beide von der Energieumwandlungsvorrichtung 22 angetrieben werden. Der Verdichter 20 (Vorrichtung zum Verdichten) und der externe Verbraucher 88 (Vorrichtung zum Entspannen) können je nach Baugröße der Einrichtung 10 nach dem Verdränger-Prinzip arbeiten oder auch als dynamisch arbeitende Vorrichtungen konzipiert sein.

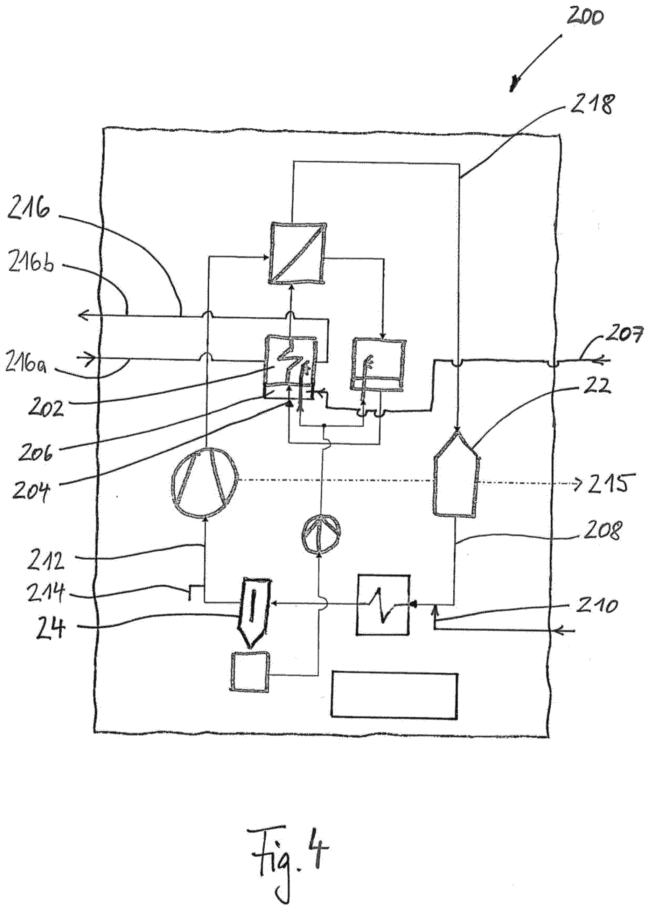

In Fig. 4 ist ein viertes bevorzugtes Ausführungsbeispiel der erfindungsgemäßen Einrichtung 200 gezeigt, das sich nur dadurch von der Einrichtung 100 nach Fig. 2 unterscheidet, dass im ersten Wärmetauscher 202 nach dem zweiten Eingang 204 eine Brennkammer 206 mit ein oder mehreren Wasserstoff-Brennern (nicht gezeigt) angeordnet ist, die mit einer Wasserstoff-Zuleitung 207 gespeist werden. Die Brennkammer 206 ist nur beispielhaft zwischen direkt nach dem Eingang 204 angeordnet, sie könnte auch beispielsweise innerhalb des Wärmeübertragers 202 angeordnet sein, um dort die Medienführungsleitung des Rekuperationsmediums zumindest teilweise zum umschließen.

Außerdem befindet sich in der Leitungsführung 208 zwischen Energieumwandlungsvorrichtung 22 und Kondensator 106 eine Luftzuführung 210 und in der Leitungsführung 212 zwischen Abscheider 24 und Verdichter 20 besteht eine Kompensationsöffnung 214. Der externe Verbraucher 215 ist hier beispielsweise ein Wasserstoff-Erzeuger (nicht gezeigt).

Diese erfindungsgemäße Einrichtung 200 kann vorteilhaft im Zusammenhang mit einer Photothermie (nicht gezeigt) verwendet werden, deren Wärmemittel (nicht gezeigt) durch das Zuleitungsteil 216a der Wärmemedienführung 216 und das Ableitungsteil 216b der Wärmemedienführung 216 durch den ersten Wärmeübertrager 202 geführt wird.

Wenn ausreichend Energie (wie im Beispiel der Einrichtung 100 gezeigt 205,3 kJ) bereitgestellt werden können, wird die Einrichtung 200 wie die Einrichtung 100 betrieben, wie es vorstehend geschildert worden ist.

Wenn dagegen mangels ausreichender Sonneneinstrahlung nicht genügend oder keine Wärme der Einrichtung 200 über die Zuleitung 216a zugeführt werden kann, wird Wasserstoff in der Brennkammer 206 verbrannt und dadurch das Rekuperationsmedium in dem ersten Wärmeübertrager 202 erwärmt. Dieser Wasserstoff kann direkt über den Wasserstofferzeuger 215 erzeugt und ggf. zwischengespeichert worden sein oder er kann auch aus einer anderen Wasserstoffquelle stammen.

Beispielsweise könnten nachts 1,5 g Wasserstoff mit 12 g Sauerstoff zu 13,5 g Wasser verbrannt werden, wodurch Wärme mit einer Energie von 205,3 kJ (Wasserstoff hat einen Brennwert von 141,8 kJ/g) erzeugt wird, die dem Rekuperationsmedium zugeführt werden würde.

Diese notwenigen 12 g Sauerstoff würden dem Rekuperationsmedium entnommen werden und diese Menge würde über die Luftzuführung 210 ausgeglichen werden. Zur Sicherheit besteht die Kompensationsöffnung 214, um einen schädlichen Überdruck in dem Rekuperationsmedienkreislauf 218 zu verhindern.

Durch diese besondere Ausgestaltung der Einrichtung 200 kann das erfindungsgemäße Verfahren kontinuierlich eingesetzt werden, wodurch nicht nur Wärmeenergie-Angebotswechsel, sondern auch Lastwechsel ausgeglichen werden können. Solche Lastwechsel könnten allerdings auch ohne die Brennammer 202 dadurch ausgeglichen werden, wenn der externe Verbraucher 208 einen Wasserstofferzeuger oder einen Stromakkumulator umfasst, so dass die umgewandelte Energie zwischengespeichert werden kann.

Aus der vorstehenden Darstellung ist deutlich geworden, dass mit der vorliegenden Erfindung eine Rückgewinnung der Energie aus wärmeführenden Medien eines Prozesses ermöglicht wird, wobei die Energie in beliebigen anderen Prozessen einsetzbar ist. Die Rückgewinnung ist dabei besonders effizient und sie ist verfahrenstechnisch einfach und kostengünstig möglich.

Soweit nichts anders angegeben ist, können sämtliche Merkmale der vorliegenden Erfindung frei miteinander kombiniert werden. Auch die in der Figurenbeschreibung beschriebenen Merkmale können, soweit nichts anderes angegeben ist, als Merkmale der Erfindung frei mit den übrigen Merkmalen kombiniert werden. Eine Beschränkung einzelner Merkmale der Ausführungsbeispiele auf die Kombination mit anderen Merkmalen der Ausführungsbeispiele ist dabei ausdrücklich nicht vorgesehen. Außerdem können gegenständliche Merkmale der Einrichtung umformuliert auch als Verfahrensmerkmale Verwendung finden und Verfahrensmerkmale umformuliert als gegenständliche Merkmale der Einrichtung. Eine solche Umformulierung ist somit automatisch mit offenbart.

### Bezugszeichenliste

- 10: erste bevorzugte Ausführungsform der erfindungsgemäßen Einrichtung 10 zur Rekuperation
- 12: Rekuperationsmedienkreislauf
- 14: erster Wärmetauscher
- 16: zweiter Wärmetauscher, Rekuperationselement
- 18: Energieumwandler
- 20: Verdichter, Turboverdichter
- 22: Energieumwandlungsvorrichtung, Turbine, Dampfturbine
- 24: Abscheider
- 26: Sammelbehälter
- 28: Pumpe, Kesselspeisewasserpumpe
- 30: thermische Isolierung
- 32: Wärmemedienführung
- 32a: Zuleitungsteil der Wärmemedienführung 32
- 32b: Ableitungsteil der Wärmemedienführung 32
- 34: erster Eingang des ersten Wärmetauschers 14
- 36: erster Ausgang des ersten Wärmetauschers 14
- 38: zweite Medienführung des ersten Wärmetauschers 14
- 40: zweiter Eingang des ersten Wärmetauschers 14
- 42: zweiter Ausgang des ersten Wärmetauschers 14
- 44: Sprühnebelerzeuger des ersten Wärmetauschers 14
- 46: erster Eingang des zweiten Wärmetauschers 16
- 48: erster Ausgang des zweiten Wärmetauschers 16
- 50: zweiter Eingang des zweiten Wärmetauschers 16
- 52: zweiter Ausgang des zweiten Wärmetauschers 16
- 54: Eingang des Energieumwandlers 18
- 56: Ausgang des Energieumwandlers 18
- 58: Sprühnebelerzeuger des Energieumwandlers 18
- 60, 62, 64: Zuleitungen
- 66: Leitung
- 70: Steuerung bzw. Regelung der Einrichtung 10
- 72: Leitungsverbindung
- 74: Leitungsverbindung
- 76: Leitungsverbindung
- 78: Leitungsverbindung
- 80: Leitungsverbindung
- 82: Leitungsverbindung
- 84: Leitungsverbindung
- 86: Antriebswelle der Dampfturbine 22
- 88: externer Verbraucher, elektrischer Generator
- 100: zweite bevorzugte Ausgestaltung der erfindungsgemäßen Einrichtung
- 102: Rekuperationskreislauf
- 104: Leitungsführung
- 106: Kondensator
- 108: Leitungsführung
- 150: dritte bevorzugte Ausgestaltung der erfindungsgemäßen Einrichtung
- 152: Rekuperationskreislauf
- 154: Leitungsführung
- 156: Überhitzer
- 158: Leitungsführung
- 200: vierte bevorzugte Ausgestaltung der erfindungsgemäßen Einrichtung
- 202: erster Wärmetauscher
- 204: zweiter Eingang des ersten Wärmetauschers
- 206: Brennkammer
- 207: Wasserstoff-Zuleitung
- 208: Leitungsführung zwischen Energieumwandler 22 und Kondensator 106
- 210: Luftzuführung
- 212: Leitungsführung zwischen Abscheider 24 und Verdichter 20
- 214: Kompensationsöffnung
- 215: externer Verbraucher, Wasserstoff-Erzeuger
- 216: Wärmemedienführung
- 216a: Zuleitungsteil der Wärmemedienführung 216
- 216b: Ableitungsteil der Wärmemedienführung 216
- 218: Rekuperationsmedienkreislauf

## Patentansprüche

1. Verfahren zur Rekuperation von Energie aus wärmeführenden Medien, wobei ein wärmeführendes Medium in einer Wärmemedienführung (32; 216) geführt wird und einem ersten Wärmetauscher (14; 202) zugeführt wird, der eine erste Medienführung mit einem ersten Eingang (34) und einem ersten Ausgang (36) und eine zweite Medienführung (38) mit einem zweiten Eingang (40; 204) und einem zweiten Ausgang (42) aufweist, wobei der erste Eingang (34) der ersten Medienführung des ersten Wärmetauschers (14; 202) mit dem wärmeführenden Medium gespeist wird und der zweite Eingang (40) der zweiten Medienführung (38) des ersten Wärmetauschers (14; 202) mit einem Rekuperationsmedium gespeist wird, das in einem Rekuperationsmedienkreislauf (12; 102; 152; 218) geführt wird, wobei der Rekuperationsmedienkreislauf (12; 102; 152; 218) in einem thermischen Arbeitsbereich verwendet wird mit Tmin ≤ T ≤ Tmax, wobei das Rekuperationsmedium in dem ersten Wärmetauscher (14; 202) zwei Stoffe aufweist, wobei der erste Stoff im thermischen Arbeitsbereich gasförmig ist und der zweite Stoff im thermischen Arbeitsbereich einen Phasenwechsel von flüssig nach gasförmig vollzieht, **dadurch gekennzeichnet, dass** ein zweiter Wärmetauscher (16) mit einer ersten Medienführung mit einem ersten Eingang (46) und einem ersten Ausgang (48) und einer zweiten Medienführung mit einem zweiten Eingang (50) und einem zweiten Ausgang (52) besteht, wobei der erste Ausgang (48) des zweiten Wärmetauschers (16) mit dem zweiten Eingang (40; 204) des ersten Wärmetauschers (14; 202) verbunden ist und der zweite Ausgang (42) des ersten Wärmetauschers (14; 202) mit dem zweiten Eingang (50) des zweiten Wärmetauschers (16) verbunden ist.

2. Verfahren nach Anspruch 1, **dadurch gekennzeichnet,**
**dass** die zwei Stoffe des Rekuperationsmediums in dem Arbeitsbereich nicht miteinander chemisch reagieren und/oder
**dass** das Rekuperationsmedium in der zweiten Medienführung (38) des ersten Wärmetauschers (14; 202) mit dem zweiten Stoff beaufschlagt wird, wobei der zweite Stoff bevorzugt eingespritzt wird.

3. Verfahren nach Anspruch 2, **dadurch gekennzeichnet, dass** das Rekuperationsmedium in der zweiten Medienführung (38) des ersten Wärmetauschers (14; 202) mehrfach hintereinander mit dem zweiten Stoff beaufschlagt wird.

4. Verfahren nach einem der vorherigen Ansprüche, **dadurch gekennzeichnet, dass** das Rekuperationsmedium stromaufwärts des ersten Wärmetauschers (14; 202) einem Energieumwandler (18) zugeführt wird, in der dem Rekuperationsmedium der zweite Stoff zugeführt wird, wobei bevorzugt eine so große Menge des zweiten Stoffes zugeführt wird, bis sich eine Sättigung im Rekuperationsmedium hinsichtlich des zweiten Stoffes einstellt.

5. Verfahren nach einem der vorherigen Ansprüche, **dadurch gekennzeichnet, dass** der Rekuperationsmedienkreislauf (12; 102; 152; 218) eine Energieumwandlungsvorrichtung (22) aufweist, wobei die Energieumwandlungsvorrichtung (22) bevorzugt stromabwärts des ersten Ausgangs (48) des zweiten Wärmetauschers (16) angeordnet ist, wobei die Energieumwandlungsvorrichtung insbesondere als Dampfturbine (22) ausgebildet ist, wobei die Energieumwandlungsvorrichtung (22) vorzugsweise einem Verbraucher (88) Energie zuführt.

6. Verfahren nach einem der vorherigen Ansprüche, **dadurch gekennzeichnet, dass** der Rekuperationsmedienkreislauf (12; 102; 152; 218) einen Verdichter (20) aufweist, wobei der Verdichter (20) bevorzugt stromaufwärts des ersten Eingangs (46) des zweiten Wärmetauschers (16) angeordnet ist, wobei der Verdichter insbesondere ein Turboverdichter (20) ist.

7. Verfahren nach einem der vorherigen Ansprüche, **dadurch gekennzeichnet, dass** der Rekuperationsmedienkreislauf (12; 102; 152; 218) einen Flüssigkeitsabscheider aufweist, wobei der Flüssigkeitsabscheider (24) bevorzugt stromabwärts der Energieumwandlungsvorrichtung (22) und stromaufwärts des Verdichters (20) angeordnet ist.

8. Verfahren nach Anspruch 7, **dadurch gekennzeichnet, dass** der vom Flüssigkeitsabscheider (24) abgeschiedene zweite Stoff mittels einer Pumpe (28) dem Rekuperationsmedienkreislauf (12; 102; 152; 218) zugeführt wird, wobei der zweite Stoff bevorzugt der zweiten Medienführung (38) des ersten Wärmetauschers (14; 202) und/oder dem Energieumwandler (18) zugeführt wird, wobei die Zuführung insbesondere getrennt steuerbar ist.

9. Verfahren nach den Ansprüchen 5 und 6 und/oder 5 und 8, **dadurch gekennzeichnet, dass** die Energieumwandlungsvorrichtung (22) die Pumpe (28) und/oder den Verdichter (20) mit Energie versorgt, wobei die Energieumwandlungsvorrichtung (22) bevorzugt der Pumpe (28) bzw. dem Verdichter (20) mechanische Energie zuführt.

10. Verfahren nach einem der vorherigen Ansprüche, **dadurch gekennzeichnet,**
**dass** der Rekuperationsmedienkreislauf (102; 152; 218) einen Kondensator (106) aufweist, wobei der Kondensator (106) bevorzugt stromabwärts der Energieumwandlungsvorrichtung (22) und stromaufwärts des Flüssigkeitsabscheiders (24) angeordnet ist, und/oder
**dass** Brennmittel (206) verwendet werden, um zumindest für den Fall, dass nicht ausreichend Wärme über das Wärme führende Medium bereitgestellt werden kann, das Rekuperationsmedium zu erwärmen, bevorzugt das Rekuperationsmedium in dem ersten Wärmetauscher (202) zu erwärmen.

11. Verfahren nach einem der vorherigen Ansprüche, **dadurch gekennzeichnet, dass** der Rekuperationsmedienkreislauf (152) einen Überhitzer (156) aufweist, wobei der Überhitzer (156) bevorzugt stromabwärts des ersten Ausgangs (48) des zweiten Wärmetauschers (16) und stromaufwärts der Energieumwandlungsvorrichtung (22) angeordnet ist, wobei der Überhitzer (156) insbesondere als dritter Wärmetauscher ausgebildet ist, der eine erste Medienführung mit einem ersten Eingang und einem ersten Ausgang und eine zweite Medienführung mit einem zweiten Eingang und einem zweiten Ausgang aufweist, wobei der zweite Eingang des dritten Wärmetauschers mit dem ersten Ausgang des zweiten Wärmetauschers und der zweite Ausgang des dritten Wärmetauschers mit der Energieumwandlungsvorrichtung verbunden ist und die erste Medienführung des dritten Wärmetauschers Teil einer Überhitzungsmedienführung ist.

12. Einrichtung (10; 100; 150; 200) zur Rekuperation von Energie aus wärmeführenden Medien, mit einem ersten Wärmetauscher (14; 202), der eine erste Medienführung mit einem ersten Eingang (34) und einem ersten Ausgang (36) und eine zweite Medienführung (38) mit einem zweiten Eingang (40) und einem zweiten Ausgang (42) aufweist, wobei die erste Medienführung des ersten Wärmetauschers (14; 202) mit einer Wärmemedienführung eines wärmeführenden Mediums verbunden ist und die zweite Medienführung (38) des ersten Wärmetauschers (14; 202) mit einem Rekuperationsmedienkreislauf (12; 102; 152; 218) verbunden ist, wobei der Rekuperationsmedienkreislauf (12; 102; 152; 218) in einem thermischen Arbeitsbereich mit Tmin ≤ T ≤ Tmax verwendbar ist, wobei das Rekuperationsmedium in dem ersten Wärmetauscher zwei Stoffe aufweist, wobei der erste Stoff ausgebildet ist, im thermischen Arbeitsbereich gasförmig zu sein, und der zweite Stoff ausgebildet ist, im thermischen Arbeitsbereich einen Phasenwechsel von flüssig nach gasförmig zu vollziehen, **dadurch gekennzeichnet, dass** ein zweiter Wärmetauscher (16) mit einer ersten Medienführung mit einem ersten Eingang (46) und einem ersten Ausgang (48) und einer zweiten Medienführung mit einem zweiten Eingang (50) und einem zweiten Ausgang (52) besteht, wobei der erste Ausgang (48) des zweiten Wärmetauschers (16) mit dem zweiten Eingang (40; 204) des ersten Wärmetauschers (14; 202) verbunden ist und der zweite Ausgang (42) des ersten Wärmetauschers (14; 202) mit dem zweiten Eingang (50) des zweiten Wärmetauschers (16) verbunden ist.

13. Einrichtung (10; 100; 150; 200) nach Anspruch 12, **dadurch gekennzeichnet,**
**dass** die Wärmemedienführung in den Kühlkreislauf einer Verbrennungsmaschine eingebunden ist und/oder
**dass** die Überhitzungsmedienführung in die Abgasführung einer Verbrennungsmaschine eingebunden ist.

14. Einrichtung (10; 100; 150; 200) nach einem der Ansprüche 12 oder 13, **dadurch gekennzeichnet,**
**dass** das Rekuperationsmedium Luft als ersten Stoff und Wasser als zweiten Stoff aufweist und/oder
**dass** Brennmittel (206) bestehen, die angepasst sind, das Rekuperationsmedium zu erwärmen, bevorzugt das Rekuperationsmedium in dem ersten Wärmetauscher (14; 202) zu erwärmen.

## Claims

1. A method for recovering energy from heat-conducting media, wherein a heat-conducting medium is carried in a heating media channel (32; 216) and supplied to a first heat exchanger (14; 202), which has a first media channel having a first inlet (34) and a first outlet (36) and a second media channel (38) having a second inlet (40; 204) and a second outlet (42), wherein the heat-conducting medium is fed to the first inlet (34) of the first media channel of the first heat exchanger (14; 202) and a recovery medium, which is carried in a recovery media circuit (12; 102; 152; 218), is fed to the second inlet (40) of the second media channel (38) of the first heat exchanger (14; 202), wherein the recovery media circuit (12; 102; 152; 218) is used in a thermal operating range where Tmin ≤ T ≤ Tmax, wherein the recovery medium in the first heat exchanger (14; 202) comprises two substances, wherein the first substance is gaseous in the thermal operating range and the second substance undergoes a phase change from liquid to gaseous in the thermal operating range, **characterised in that** there is a second heat exchanger (16) with a first media channel having a first inlet (46) and a first outlet (48) and a second media channel having a second inlet (50) and a second outlet (52), wherein the first outlet (48) of the second heat exchanger (16) is connected to the second inlet (40; 204) of the first heat exchanger (14; 202) and the second outlet (42) of the first heat exchanger (14; 202) is connected to the second inlet (50) of the second heat exchanger (16).

2. The method according to claim 1, **characterised in that**
the two substances of the recovery medium do not chemically react with one another in the operating range and/or
the second substance is added to the recovery medium in the second media channel (38) of the first heat exchanger (14; 202), wherein the second substance is preferably injected.

3. The method according to claim 2, **characterised in that** the second substance is added several times in succession to the recovery medium in the second media channel (38) of the first heat exchanger (14; 202).

4. The method according to one of the preceding claims, **characterised in that** the recovery medium is supplied to an energy converter (18) upstream of the first heat exchanger (14; 202), in which energy converter the second substance is supplied to the recovery medium, wherein preferably a sufficiently large amount of the second substance is supplied until a saturation in respect of the second substance is established in the recovery medium.

5. The method according to one of the preceding claims, **characterised in that** the recovery media circuit (12; 102; 152; 218) has an energy conversion device (22), wherein the energy conversion device (22) is preferably arranged downstream of the first outlet (48) of the second heat exchanger (16), wherein the energy conversion device is designed in particular as a steam turbine (22), wherein the energy conversion device (22) preferably supplies energy to a consumer (88).

6. The method according to one of the preceding claims, **characterised in that** the recovery media circuit (12; 102; 152; 218) has a compressor (20), wherein the compressor (20) is preferably arranged upstream of the first inlet (46) of the second heat exchanger (16), wherein the compressor is in particular a turbo-compressor (20).

7. The method according to one of the preceding claims, **characterised in that** the recovery media circuit (12; 102; 152; 218) has a liquid separator, wherein the liquid separator (24) is preferably arranged downstream of the energy conversion device (22) and upstream of the compressor (20).

8. The method according to claim 7, **characterised in that** the second substance separated by the liquid separator (24) is supplied by means of a pump (28) to the recovery media circuit (12; 102; 152; 218), wherein the second substance is preferably supplied to the second media channel (38) of the first heat exchanger (14; 202) and/or to the energy converter (18), wherein the supply is in particular separately controllable.

9. The method according to claims 5 and 6 and/or 5 and 8, **characterised in that** the energy conversion device (22) provides energy to the pump (28) and/or the compressor (20), wherein the energy conversion device (22) preferably supplies mechanical energy to the pump (28) and/or the compressor (20).

10. The method according to one of the preceding claims, **characterised in that** the recovery media circuit (102; 152; 218) has a condenser (106), wherein the condenser (106) is preferably arranged downstream of the energy conversion device (22) and upstream of the liquid separator (24), and/or that combustion means (206) are used to heat the recovery medium, preferably to heat the recovery medium in the first heat exchanger (202), at least for the case where insufficient heat can be provided by the heat-conducting medium.

11. The method according to one of the preceding claims, **characterised in that** the recovery media circuit (152) has a superheater (156), wherein the superheater (156) is preferably arranged downstream of the first outlet (48) of the second heat exchanger (16) and upstream of the energy conversion device (22), wherein the superheater (156) is designed in particular as a third heat exchanger, which has a first media channel having a first inlet and a first outlet and a second media channel having a second inlet and a second outlet, wherein the second inlet of the third heat exchanger is connected to the first outlet of the second heat exchanger and the second outlet of the third heat exchanger is connected to the energy conversion device, and the first media channel of the third heat exchanger is part of a superheating media channel.

12. A device (10; 100; 150; 200) for recovering energy from heat-conducting media, comprising a first heat exchanger (14; 202), which has a first media channel having a first inlet (34) and a first outlet (36) and a second media channel (38) having a second inlet (40) and a second outlet (42), wherein the first media channel of the first heat exchanger (14; 202) is connected to a heating media channel for a heat-conducting medium and the second media channel (38) of the first heat exchanger (14; 202) is connected to a recovery media circuit (12; 102; 152; 218), wherein the recovery media circuit (12; 102; 152; 218) can be used in a thermal operating range where Tmin ≤ T ≤ Tmax, wherein the recovery medium in the first heat exchanger comprises two substances, wherein the first substance is designed to be gaseous in the thermal operating range and the second substance is designed to undergo a phase change from liquid to gaseous in the thermal operating range, **characterised in that** there is a second heat exchanger (16) with a first media channel having a first inlet (46) and a first outlet (48) and a second media channel having a second inlet (50) and a second outlet (52), wherein the first outlet (48) of the second heat exchanger (16) is connected to the second inlet (40; 204) of the first heat exchanger (14; 202) and the second outlet (42) of the first heat exchanger (14; 202) is connected to the second inlet (50) of the second heat exchanger (16).

13. The device (10; 100; 150; 200) according to claim 12, **characterised in that**
the heating media channel is integrated into the cooling circuit of an internal combustion engine and/or
the superheating media channel is integrated into the exhaust system of an internal combustion engine.

14. The device (10; 100; 150; 200) according to one of claims 12 or 13, **characterised in that**
the recovery medium contains air as the first substance and water as the second substance and/or
there are combustion means (206) which are adapted to heat the recovery medium, preferably to heat the recovery medium in the first heat exchanger (14; 202).

## Revendications

1. Procédé de récupération de l'énergie à partir de fluides caloporteurs, dans lequel un fluide caloporteur est guidé dans un moyen de guidage de fluide caloporteur (32 ; 216) et introduit dans un premier échangeur de chaleur (14 ; 202) qui présente un premier moyen de guidage de fluide avec une première entrée (34) et une première sortie (36) et un deuxième moyen de guidage de fluide (38) avec une deuxième entrée (40 ; 204) et une deuxième sortie (42), la première entrée (34) du premier moyen de guidage de fluide du premier échangeur de chaleur (14 ; 202) étant alimentée en fluide caloporteur et la deuxième entrée (40) du deuxième moyen de guidage de fluide (38) du premier échangeur de chaleur (14 ; 202) étant alimentée en un fluide de récupération qui est guidé dans un circuit de fluide de récupération (12 ; 102 ; 152 ; 218), le circuit de fluide de récupération (12 ; 102 ; 152 ; 218) étant utilisé dans une plage de travail thermique avec Tmin ≤ T ≤ Tmax, le fluide de récupération présentant, dans le premier échangeur de chaleur (14 ; 202), deux substances, la première substance étant sous forme gazeuse dans la plage de travail thermique et la deuxième substance effectuant un changement de phase d'une phase liquide à une phase gazeuse dans la plage de travail thermique, **caractérisé en ce qu'**il y a un deuxième échangeur de chaleur (16) doté d'un premier moyen de guidage de fluide avec une première entrée (46) et une première sortie (48) et d'un deuxième moyen de guidage de fluide avec une deuxième entrée (50) et une deuxième sortie (52), la première sortie (48) du deuxième échangeur de chaleur (16) étant reliée à la deuxième entrée (40 ; 204) du premier échangeur de chaleur (14 ; 202) et la deuxième sortie (42) du premier échangeur de chaleur (14 ; 202) étant reliée à la deuxième entrée (50) du deuxième échangeur de chaleur (16).

2. Procédé selon la revendication 1, **caractérisé**
**en ce que** les deux substances du fluide de récupération ne réagissent pas chimiquement l'une avec l'autre dans la plage de travail et/ou
**en ce que** le fluide de récupération est soumis, dans le deuxième moyen de guidage de fluide (38) du premier échangeur de chaleur (14 ; 202), à l'effet de la deuxième substance, la deuxième substance étant de préférence injectée.

3. Procédé selon la revendication 2, **caractérisé en ce que** le fluide de récupération est soumis, dans le deuxième moyen de guidage de fluide (38) du premier échangeur de chaleur (14 ; 202), à plusieurs reprises à l'effet de la deuxième substance.

4. Procédé selon l'une des revendications précédentes, **caractérisé en ce que**, en amont du premier échangeur de chaleur (14 ; 202), le fluide de récupération est introduit dans un convertisseur d'énergie (18) dans lequel la deuxième substance est introduite dans le fluide de récupération, la deuxième substance étant de préférence introduite dans une quantité telle qu'une saturation se produit dans le fluide de récupération en ce qui concerne la deuxième substance.

5. Procédé selon l'une des revendications précédentes, **caractérisé en ce que** le circuit de fluide de récupération (12 ; 102 ; 152 ; 218) présente un dispositif de conversion d'énergie (22), le dispositif de conversion d'énergie (22) étant de préférence disposé en aval de la première sortie (48) du deuxième échangeur de chaleur (16), le dispositif de conversion d'énergie étant en particulier réalisé sous la forme d'une turbine à vapeur (22), le dispositif de conversion d'énergie (22) introduisant de préférence de l'énergie dans un consommateur (88).

6. Procédé selon l'une des revendications précédentes, **caractérisé en ce que** le circuit de fluide de récupération (12 ; 102 ; 152 ; 218) présente un compresseur (20), le compresseur (20) étant de préférence disposé en amont de la première entrée (46) du deuxième échangeur de chaleur (16), le compresseur étant de préférence un turbocompresseur (20).

7. Procédé selon l'une des revendications précédentes, **caractérisé en ce que** le circuit de fluide de récupération (12 ; 102 ; 152 ; 218) présente un séparateur de liquide, le séparateur de liquide (24) étant de préférence disposé en aval du dispositif de conversion d'énergie (22) et en amont du compresseur (20).

8. Procédé selon la revendication 7, **caractérisé en ce que** la deuxième substance séparée par le séparateur de liquide (24) est introduite dans le circuit de fluide de récupération (12 ; 102 ; 152 ; 218) au moyen d'une pompe (28), la deuxième substance étant de préférence introduite dans le deuxième moyen de guidage de fluide (38) du premier échangeur de chaleur (14 ; 202) et/ou dans le convertisseur d'énergie (18), l'introduction pouvant en particulier être commandée séparément.

9. Procédé selon les revendications 5 et 6 et/ou 5 et 8, **caractérisé en ce que** le dispositif de conversion d'énergie (22) alimente la pompe (28) et/ou le compresseur (20) en énergie, le dispositif de conversion d'énergie (22) alimentant de préférence la pompe (28) ou le compresseur (20) en énergie mécanique.

10. Procédé selon l'une des revendications précédentes, **caractérisé**
**en ce que** le circuit de fluide de récupération (102 ; 152 ; 218) présente un condenseur (106), le condenseur (106) étant de préférence disposé en aval du dispositif de conversion d'énergie (22) et en amont du séparateur de liquide (24), et/ou
**en ce que** des moyens de combustion (206) sont utilisés pour, au moins dans le cas où la quantité de chaleur qui peut être fournie par le biais du fluide caloporteur est insuffisante, chauffer le fluide de récupération, de préférence chauffer le fluide de récupération dans le premier échangeur de chaleur (202).

11. Procédé selon l'une des revendications précédentes, **caractérisé en ce que** le circuit de fluide de récupération (152) présente un surchauffeur (156), le surchauffeur (156) étant de préférence disposé en aval de la première sortie (48) du deuxième échangeur de chaleur (16) et en amont du dispositif de conversion d'énergie (22), le surchauffeur (156) étant en particulier réalisé sous la forme d'un troisième échangeur de chaleur qui présente un premier moyen de guidage de fluide avec une première entrée et une première sortie et un deuxième moyen de guidage de fluide avec une deuxième entrée et une deuxième sortie, la deuxième entrée du troisième échangeur de chaleur étant reliée à la première sortie du deuxième échangeur de chaleur et la deuxième sortie du troisième échangeur de chaleur étant reliée au dispositif de conversion d'énergie et le premier moyen de guidage de fluide du troisième échangeur de chaleur faisant partie d'un moyen de guidage de fluide de surchauffe.

12. Dispositif (10 ; 100 ; 150 ; 200) de récupération de l'énergie à partir de fluides caloporteurs, comportant un premier échangeur de chaleur (14 ; 202) qui présente un premier moyen de guidage de fluide avec une première entrée (34) et une première sortie (36) et un deuxième moyen de guidage de fluide (38) avec une deuxième entrée (40) et une deuxième sortie (42), le premier moyen de guidage de fluide du premier échangeur de chaleur (14 ; 202) étant relié à un moyen de guidage de fluide caloporteur d'un fluide caloporteur et le deuxième moyen de guidage de fluide (38) du premier échangeur de chaleur (14 ; 202) étant relié à un circuit de fluide de récupération (12 ; 102 ; 152 ; 218), le circuit de fluide de récupération (12 ; 102 ; 152 ; 218) pouvant être utilisé dans une plage de travail thermique avec Tmin ≤ T ≤ Tmax, le fluide de récupération présentant, dans le premier échangeur de chaleur, deux substances, la première substance étant conçue pour être sous forme gazeuse dans la plage de travail thermique et la deuxième substance étant conçue pour effectuer un changement de phase d'une phase liquide à une phase gazeuse dans la plage de travail thermique, **caractérisé en ce qu'**il y a un deuxième échangeur de chaleur (16) doté d'un premier moyen de guidage de fluide avec une première entrée (46) et une première sortie (48) et d'un deuxième moyen de guidage de fluide avec une deuxième entrée (50) et une deuxième sortie (52), la première sortie (48) du deuxième échangeur de chaleur (16) étant reliée à la deuxième entrée (40 ; 204) du premier échangeur de chaleur (14 ; 202) et la deuxième sortie (42) du premier échangeur de chaleur (14 ; 202) étant reliée à la deuxième entrée (50) du deuxième échangeur de chaleur (16).

13. Dispositif (10 ; 100 ; 150 ; 200) selon la revendication 12, **caractérisé**
**en ce que** le moyen de guidage de fluide caloporteur est intégré dans le circuit de refroidissement d'une machine thermique et/ou
**en ce que** le moyen de guidage de fluide de surchauffe est intégré dans le moyen de guidage des gaz d'échappement d'une machine thermique.

14. Dispositif (10 ; 100 ; 150 ; 200) selon l'une des revendications 12 ou 13, **caractérisé**
**en ce que** le fluide de récupération présente de l'air comme première substance et de l'eau comme deuxième substance et/ou
**en ce que** des moyens de combustion (206) sont présents, qui sont adaptés pour chauffer le fluide de récupération, de préférence chauffer le fluide de récupération dans le premier échangeur de chaleur (14 ; 202).
